# EUROPEAN PATENT APPLICATION

(11) **EP 2 623 399 A1**
(43) Date of publication of application: **07.08.2013**
(21) Application number: 10857811.3
(22) Date of filing: 28.09.2010
(51) Int. Cl.: B62D 25/04, B62D 25/20

(54) **VEHICLE BODY STRUCTURE**

(71) Applicant: TOYOTA JIDOSHA KABUSHIKI KAISHA, Aichi-ken, 471-8571 (JP)
(72) Inventor: TORII, Nobuyuki, Toyota-shi Aichi 471-8571 (JP)
(74) Representative: Winter, Brandl, Fürniss, Hübner, Röss, Kaiser, Polte - Partnerschaft
(86) International application number: PCT/JP2010/066833
(87) International publication number: WO 2012/042596

(57) **Abstract**

In a vehicle body structure that constitutes a vehicle body, to keep a joint of members even when a large load acts on a joint section of the members, a patch member 50 configured to deform at least any one of a locker 10 or a pillar 20 in a desired state when a load acts on a joint region 30 of the locker 10 and the pillar 20 is disposed to the joint region 30. With the configuration, even when a large load acts on the joint region 30, the locker 10 can be suppressed from being deformed in a section where welding portions 62 that connects the locker 10 and the pillar 20 in the joint region 30 are positioned, thereby the welding portions 62 can be suppressed from being broken.

## Description

### Field

The present invention relates to a vehicle body structure.

### Background

A vehicle body structure for securing strength of a vehicle is provided so as to be able to receive various loads generated by an acceleration and the like at the time of travel of the vehicle, and respective members for securing the strength of the vehicle are joined by being welded to each other. For example, in a vehicle body structure described in Patent Literature 1, a pillar is joined to a side sill by spot welding. Further, in Patent Literature 1, since the pillar is formed in such a shape that plural ridge lines are dispersed, welding portions are suppressed from being positioned on extending lines of the plural ridge lines, thereby a load at the time of collision and the like is suppressed from being concentrated to the welding portions.

Further, in a pillar lower section reinforcing structure of a vehicle described in Patent Literature 2, a lower end of a center pillar reinforce extending in a vehicle body up-down direction is joined to an outer surface of a locker outer reinforce extending in a vehicle body front-back direction with a reinforcing plate interposed therebetween. Further, a side outer panel which also acts as a locker outer and a pillar outer is disposed outside of the center pillar reinforce and the locker outer reinforce. As described above, in the pillar lower section reinforcing structure of the vehicle described in Patent Literature 2, a pillar lower section is reinforced by welding the center pillar reinforce and locker outer reinforce by interposing the reinforcing plate therebetween to thereby increasing rigidity of a locker at the time of side collision.

### Citation List

### Patent Literature

Patent Literature 1: Japanese Patent Application Laid-open No. 2009-113769
Patent Literature 2: Japanese Patent Application Laid-open No. 2000-085634

### Summary

### Technical Problem

However, when a large load is generated at the time of vehicle collision and the like, the large load may locally act not only on the extending lines of the plural ridge lines of the pillar but also on the welding portions positioned on the extending lines of the ridge lines of the pillar. When, for example, a large tensile load acts on the pillar, the large tensile load is transmitted to the side sill, i.e., to the locker along the ridge lines of the pillar so that the large tensile load acts on sections where the extending lines of the ridge lines intersect the locker.

Here, since the pillar is joined to the locker only by the welding portions in many cases, when a tensile load acts on the locker from the pillar, the tensile load is transmitted from the pillar to the locker via the welding portions. Accordingly, when a large tensile load locally acts on the locker from the pillar, the load acts on the welding portions positioned in the vicinity of the locker. Thus, when a large tensile load acts on the pillar at the time of vehicle collision and the like and the tensile load acts on the sections where the extending lines of the ridge lines of the pillar intersect the locker, the tensile load acts on the welding portions positioned in the vicinities of the intersecting sections.

With the configuration, in the locker, since a force is concentrated to the welding portions and the welding portions are pulled upward by a large force, a bent line may be generated to the section of the locker, when the bent line is generated to the locker, a crack may be generated to the welding portions in the section. In Patent Literature 1, the pillar is formed in the shape for dispersing the ridge lines, and, in Patent Literature 2, the reinforcing plate is interposed between the center pillar reinforce and the locker outer reinforce. However, since these structures do not intend to suppress that the bent line is generated to the welding portions, even if the conventional structures are used, it is difficult to suppress a crack of the welding portions due to the generation of the bent line.

An object of the present invention, which was made in view of the problems described above, is to provide a vehicle body structure capable of keeping a joint even when a large load acts on joint sections of members. Solution to Problem

In order to solve the above mentioned problem and achieve the object, in a vehicle body structure according to the present invention that constitutes a vehicle body, a deformation inducing member is disposed to a joint region of a locker and a pillar to deform at least any one of the locker or the pillar in a desired state when a load acts on the joint region of the locker and the pillar.

Further, in the vehicle body structure, the deformation inducing member is disposed excluding peripheries of a plurality of welding portions which are positioned to the joint region and join the locker and the pillar and whose stress becomes excessive when a load acts on the joint region in the welding portions.

Further, in the vehicle body structure, the deformation inducing member is formed in an L-shape and disposed to the joint region.

Further, in the vehicle body structure, the deformation inducing member is disposed without including a region on a side opposite to a side where the pillar in the locker extends from the locker.

### Advantageous Effects of Invention

The vehicle body structure according to the present invention achieves an effect that even when a large load acts on a joint section of members, a joint can be kept.

### Brief Description of Drawings

FIG. 1 is a perspective view of a frame member having a vehicle body structure according to an embodiment.
FIG. 2 is a perspective view of a pillar.
FIG. 3 is an exploded perspective of the pillar.
FIG. 4 is an A-A fragmentary view of FIG. 3.
FIG. 5 is a B-B cross-sectional view of FIG. 4.
FIG. 6 is a C-C cross-sectional view of FIG. 5.
FIG. 7 is a detailed view of a joint region of the pillar and a locker.
FIG. 8 is a D-D cross-sectional view of FIG. 7.
FIG. 9 is an explanatory view illustrating a deformed state of the locker.
FIG. 10 is an explanatory view illustrating a modification of the vehicle body structure according to the embodiment.
FIG. 11 is an explanatory view illustrating a modification of the vehicle body structure according to the embodiment.
FIG. 12 is an explanatory view illustrating a modification of the vehicle body structure according to the embodiment.

### Description of Embodiments

An embodiment of a vehicle body structure according to the present invention will be explained below in detail based on drawings. Note that the present invention is by no means limited to the embodiment. Further, the components in the embodiment include components that can be replaced by a person skilled in the art as well as are easy or substantially the same components.

### [Embodiment]

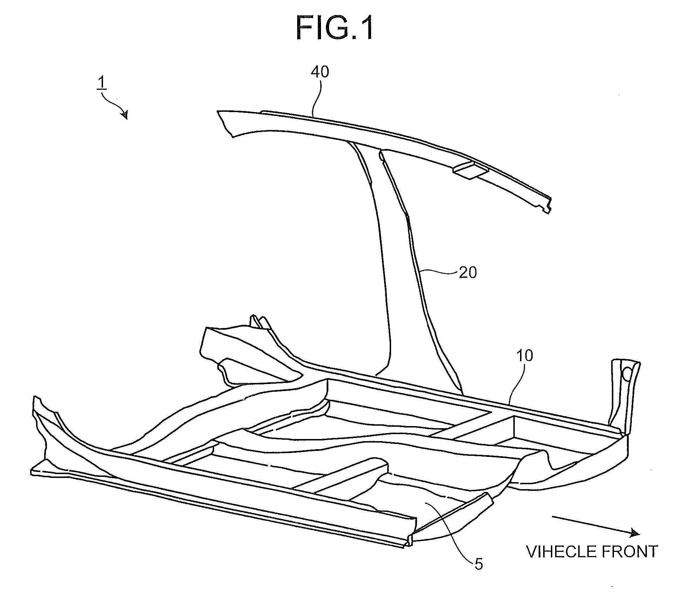

FIG. 1 is a perspective view of a frame member having a vehicle body structure according to an embodiment. A frame member 1 illustrated in the drawing has the vehicle body structure according to the present invention, and the frame member 1 is disposed as a member for forming a framework of a body of a vehicle and securing strength of the body. The frame member 1 disposed as described above has, as main components, a floor 5 positioned on a lower surface side of the body, lockers 10 as members positioned on both the sides of the floor 5 in a width direction of the vehicle and extending in a front-back direction of vehicle, pillars 20 disposed on both sides in the width direction of the vehicle and joined to the vicinities of intermediate sections of the lockers 10 in the vehicle front-back direction, and roof rails 40 disposed on both sides in the width direction of the vehicle and joined to ends in the pillars 20 on the sides opposite to the ends of the pillars 20 joined to the lockers 10. As described above, the pillars 20 disposed on both sides in the width direction of the vehicle extend upward of the vehicle from the vicinities of the intermediate sections of the lockers 10 in the vehicle front-back direction, are interposed between the lockers 10 and the roof rails 40 and connected to both the lockers 10 and the roof rails 40, thereby connecting the lockers 10 to the roof rails 40.

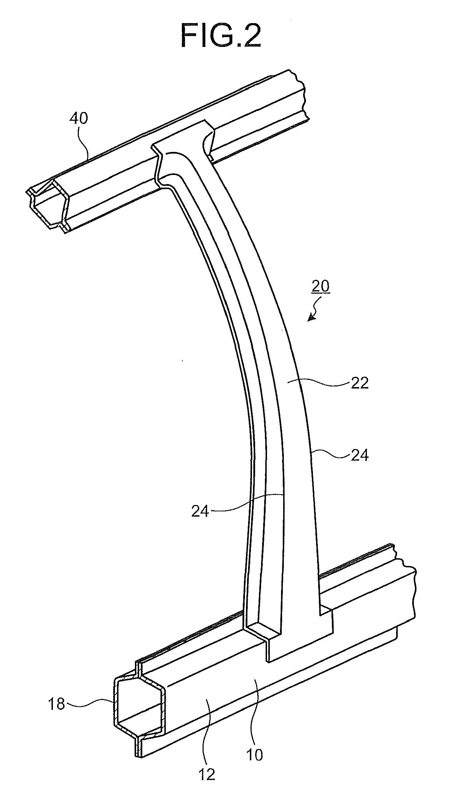

FIG. 2 is a perspective view of a pillar. Although both the ends of the pillar 20 are joined to the locker 10 and the roof rail 40 as described above, to describe in detail, a pillar reinforce 22 as a rigid member provided with the pillar 20 is joined to the locker 10 and the roof rail 40. The pillar reinforce 22 is formed in an substantially hat type shape whose cross-sectional shape when viewed in an up-down direction of the vehicle is formed in such a shape that an opening side faces in an inside direction in the width direction of the vehicle. Accordingly, in the pillar reinforce 22, corners in the cross-sectional shape are formed as ridge lines 24 extending in the up-down direction of the vehicle.

In contrast, both the locker 10 and the roof rail 40 to which the pillar reinforce 22 is joined are formed in a pipe-like shape having a hollow section therein by combining plural members. For example, the locker 10 is formed by combining a locker outer 12 positioned outside in the width direction of the vehicle and a locker inner 18 positioned inside in the width direction of the vehicle, and among them, a cross-sectional shape of the locker outer 12 when viewed from the vehicle front-back direction is formed in the substantially hat type shape in which an opening side becomes an inside direction in the width direction of the vehicle. In contrast, a cross-sectional shape of the locker inner 18 when viewed from the vehicle front-back direction is formed in the substantially hat type shape in which an opening side becomes an outside direction in the width direction of the vehicle. As described above, the locker 10 is formed in the pipe-like shape by combining the locker outer 12 and the locker inner 18 formed in the substantially hat type shape, and the roof rail 40 is also formed in the pipe-like shape by combining substantially hat type members likewise.

The pillar reinforce 22 is engaged with the locker 10 and the roof rail 40 formed as described above from outside in the width direction of the vehicle so as to cover a part of the locker 10 and the roof rail 40, thereby joining to the locker 10 and the roof rail 40.

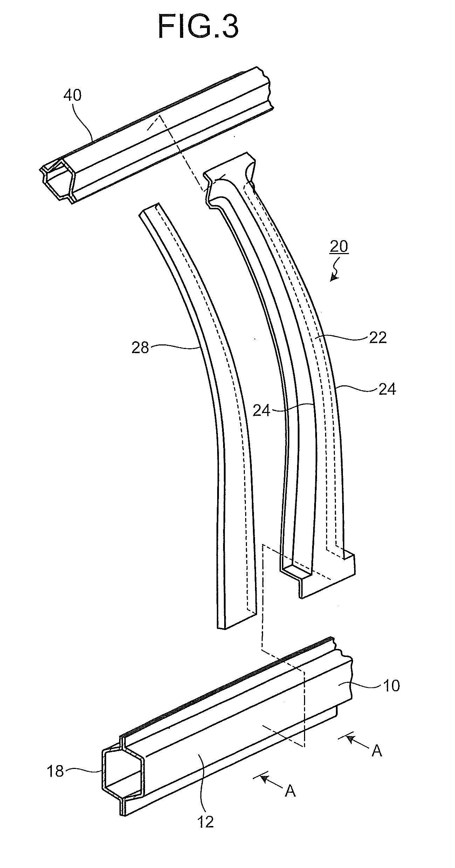

FIG. 3 is an exploded perspective view of the pillar. Further, the pillar 20 further has an inner panel 28. The inner panel 28 is disposed inside of the pillar reinforce 22 in the width direction of the vehicle and clogs an opening section of the pillar reinforce 22 formed in the substantially hat type shape. Accordingly, a cross-sectional shape of the pillar 20 when viewed in the up-down direction of the vehicle is formed in an angle type pipe-like shape by the pillar reinforce 22 and the inner panel 28.

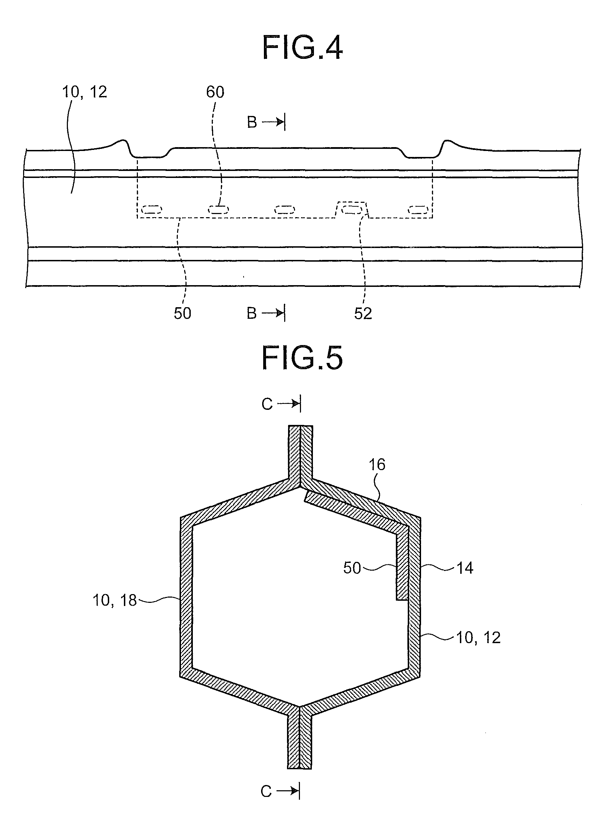

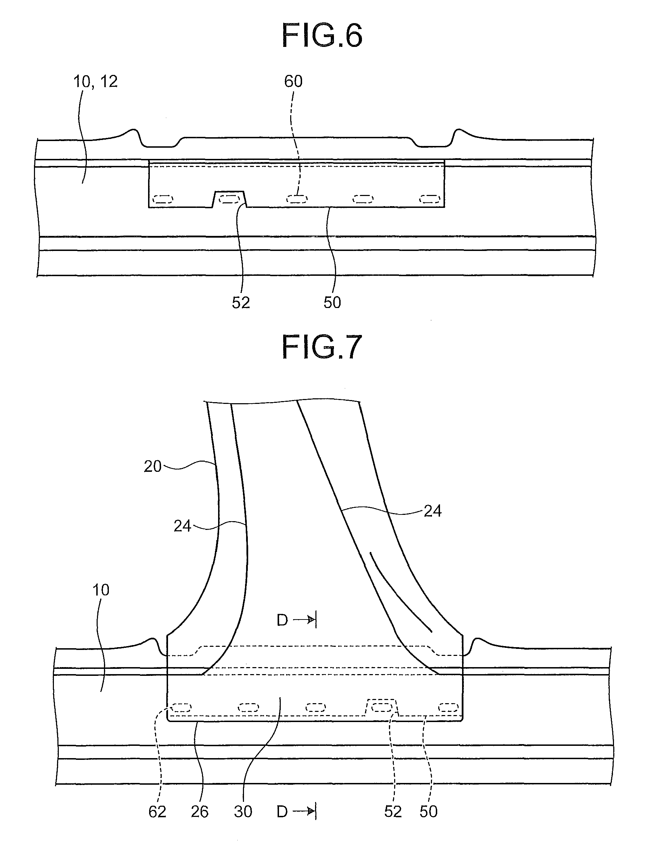

FIG. 4 is an A-A fragmentary view of FIG. 3. FIG. 5 is a B-B cross-sectional view of FIG. 4. FIG. 6 is a C-C cross-sectional view of FIG. 5. Further, the locker 10 composed of the locker outer 12 and the locker inner 18 has a patch member 50 disposed in a region in which the pillar 20 is joined to the locker 10. The patch member 50 is disposed as a deformation inducing member for deforming the locker 10 in a desired state when a load acts on the pillar 20. To describe in detail, the patch member 50 is disposed inside of the locker 10 formed in the pipe-like shape and disposed by being welded to an inside surface in the locker outer 12, that is, to a surface on the locker inner 18 side in the locker outer 12.

As described above, the patch member 50 disposed to the inside surface of the locker outer 12 is formed in an substantially L-shape when viewed from the vehicle front-back direction and formed at an angle approximately as large as a relative angle between an outer side surface 14 which is an outer section in the locker outer 12 in the width direction of the vehicle and an outer upper surface 16 which is an upper section in the locker outer 12 in the up-down direction of the vehicle. The patch member 50 formed in the substantially L-shape as described above is disposed to the inside surface in the locker outer 12 by being joined to an inside surface of the outer side surface 14 and to an inside surface of the outer upper surface 16.

Further, although the pillar 20 is joined to the locker 10 by spot welding the pillar 20 to the outer side surface 14 of the locker outer 12, the patch member 50 is disposed in the region in which the pillar 20 is joined to the locker 10 as described above. That is, since the pillar 20 is joined to the locker 10 by the spot welding, although plural welding positions 60, which are sections to which welding is intended to be applied, are set to a section of the outer side surface 14 to which the pillar 20 is to be joined, the patch member 50 is disposed in a region including all the welding positions 60. To describe in detail, the patch member 50 has a length in the vehicle front-back direction which is a little longer than a distance between the welding positions 60 located at the furthermost positions, and the patch member 50 is disposed in the region whose length in the vehicle front-back direction is a little longer than region in which all the welding positions 60 are positioned by being formed in the length.

Further, some of the sections of the patch member 50 joined to the outer side surface 14 are cut out and formed as cutout portions 52. The cutout portions 52 are formed to position in the sections to which at least some welding positions 60 of the plural welding positions 60 are set.

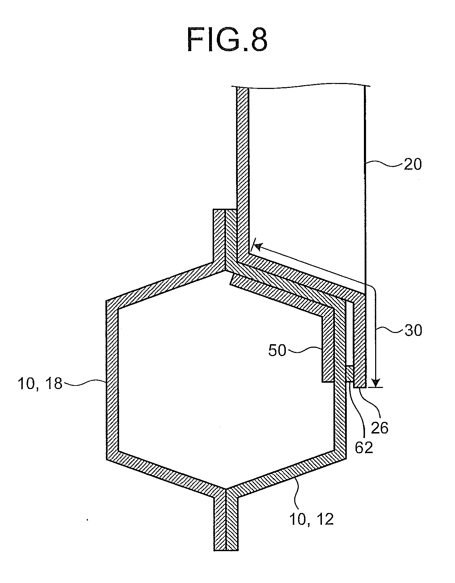

FIG. 7 is a detailed view of a joint region of the pillar and the locker. FIG. 8 is a D-D cross-sectional view of FIG. 7. When the pillar 20 is joined to the locker 10, the pillar 20 is joined in such a manner that a joint portion 26 formed to the pillar 20 is welded in the welding positions 60 in a state that the joint portion 26 overlaps an outside surface in the outer side surface 14 of the locker outer 12. That is, the welding positions 60 become welding portions 62 acting as connecting sections, and the pillar 20 is joined to the locker 10 by being connected to the locker outer 12 in the welding portions 62. Accordingly, the patch member 50, which is formed in the substantially L-shape, disposed to the inside surface of the locker outer 12, and disposed in the region including all the welding positions 60, are disposed in the region including all the welding portions 62, and, to describe in detail, the patch member 50 is disposed in the region whose length in the vehicle front-back direction is a little longer than the region in which all the welding portions 62 are positioned. With the configuration, the patch member 50 is disposed to a joint region 30 that is a region in which the pillar 20 and the locker 10 are joined by being overlapped.

Note that although the patch member 50 is disposed in the region including all the welding portions 62 as described above, the region in the case does not necessarily show that the patch member 50 overlaps all the welding portions 62 and shows that the region in which the patch member 50 is disposed includes all the welding portions 62. Accordingly, a case in which the patch member 50 does not overlap the welding portions 62 is also included depending on a shape of the patch member 50.

Further, although the pillar reinforce 22 provided with the pillar 20 is formed with the ridge lines 24 extending in the up-down direction of the vehicle, the patch member 50 is disposed in the joint region 30 of the pillar 20 and the locker 10. Accordingly, the patch member 50 is disposed including also extending lines of the ridge lines 24 of the pillar 20.

Further, the patch member 50 is formed with the cutout portions 52, and the cutout portions 52 are formed to position in the sections to which the some of the welding positions 60 are set. Accordingly, the cutout portions 52 of the patch member 50 are formed to position to some of the welding portions 62 when the pillar 20 is joined to the locker 10 by the welding portions 62. That is, the patch member 50 is disposed excluding peripheries of some of the welding portions 62. Note that the welding portions 62 to which the cutout portions 52 is positioned as described above are preferably welding portions 62 whose stress becomes excessive in the plural welding portions 62 when a load acts on the joint region 30.

Further, the patch member 50 is formed in the substantially L-shape and disposed to both the inside surfaces of the outer side surface 14 and the outer upper surface 16 of the locker outer 12. Accordingly, the patch member 50 is not disposed to a lower side in the locker 10 and disposed near to an upper section of the locker 10. Further, the pillar 20 is joined to the locker 10 so as to extend upward from the locker 10. Accordingly, the patch member 50 is disposed without including a region on a side opposite to a side to which the pillar 20 in the locker 10 extends from the locker 10.

The vehicle body structure according to the embodiment is configured as described above, and an operation of the vehicle body structure will be explained below. The vehicle provided with the vehicle body structure according to the embodiment mainly secures rigidity of the body by the frame member 1 and receives a large amount of a load generated by an acceleration and the like while the vehicle travels by the frame member 1. For example, the lockers 10, which are positioned on both ends of the floor 5 in the width direction of the vehicle and extend in the vehicle front-back direction secure strength of the floor 5 and suppresses flexure in a front-back direction of the floor 5 and distortion of the floor 5. Further, the roof rails 40 secure strength of a roof of the vehicle and suppress flexure and distortion in a front-back direction of the roof. Further, the pillars 20, which extend in the up-down direction of the vehicle, are joined to the lockers 10 and the roof rails 40, and connect both the lockers 10 and the roof rails 40, improve rigidity of the body in its entirety by connecting the roof and the floor 5. With the configuration, when the vehicle travels, a deformation such as flexure and the like of the body due to a load generated at the time of travel is minimized and stability at the time of travel is secured.

Although the load generated at the time of travel of the vehicle is mainly received by the frame member 1 having the strength as described above, the vehicle may receive a load other than the load acting on the body in an ordinary travel. For example, when a driver's own vehicle collides with other vehicle and the like or when other vehicle and the like collide with the driver's own vehicle at the time of travel of vehicles, a load due to energy of the collision acts on the frame member 1. When the load due to the energy of the collision acts on the frame member 1 as described above, a load larger than a load that acts at the time of ordinary travel of vehicle acts on the frame member 1 in many cases. Accordingly, the frame member 1 may be deformed by the large load.

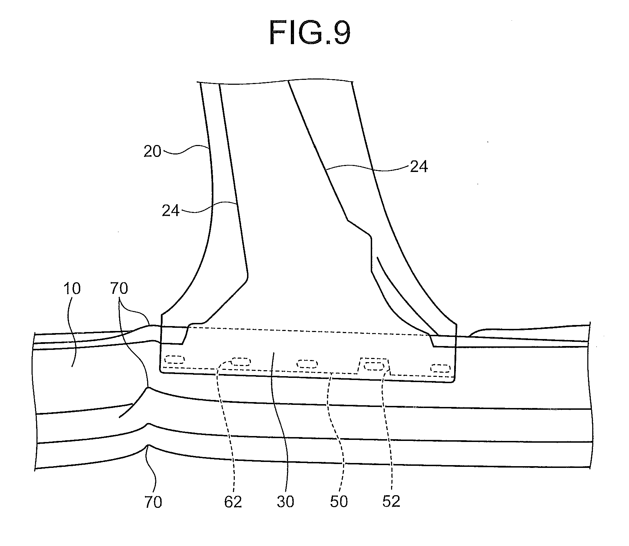

FIG. 9 is an explanatory view illustrating a deformed state of the locker. When the frame member 1 receives a large load, although a section of the frame member 1 on which the large load acts and a section of the frame member 1 whose stress is increased may be deformed, a case that a large load acts on the joint region 30 of the pillar 20 and the locker 10 will be explained as an example of a case that the frame member 1 is deformed by that the large load acts on the frame member 1 as described above.

Although the pillar 20 is joined to the locker 10 by spot welding a lower edge of the pillar 20 to the locker 10, an edge of the pillar 20 on an opposite side is joined to a roof rail 40. Accordingly, although the pillar 20 is disposed as a member for securing the strength of the vehicle body and a relatively large load is likely to act on the pillar 20 even at the time of ordinary travel, when a load due to collision energy acts on the pillar 20 at the time of vehicle collision, a further large load is likely to act on the joint region 30 of the locker 10 and the pillar 20.

As described above, as the load acting on the joint region 30 of the locker 10 and the pillar 20, there is a case that at least a part of the pillar 20 is pulled upward from the locker 10 by, for example, that a large load in the front-back direction is input to the locker 10 because a large load acts in the front-back direction of the vehicle by that the vehicle collides and that a large load in the width direction of the vehicle is input to the pillar 20 due to side collision of the vehicle. Further, when a load input to the pillar 20, since a force due to the load is likely to be transmitted along the ridge lines 24 formed to the pillar 20, a large load is likely to act on the joint region 30 of the pillar 20 and the locker 10 and in particular on the extending lines of the ridge lines 24 of the pillar 20. With the operation, the section of the locker 10 may be deformed by the large load acting in the vicinity of the joint region 30.

Here, the patch member 50 is disposed in the joint region 30 to the pillar 20 in the locker 10. Accordingly, strength of the section to which the patch member 50 is disposed is increased in comparison with a peripheral section in the locker 10. Accordingly, the section to which the patch member 50 is disposed is less likely to be deformed even when a large load acts on the locker 10.

In contrast, since strength of a section in the locker 10 to which the patch member 50 is not disposed is not made high by the patch member 50, when a load is input, stress is likely to become large. In particular, stress concentration is likely to be generated to a boundary section to the section to which the patch member 50 is disposed, that is, a section to which an edge of the patch member 50 is positioned because stress abruptly changes. Accordingly, when a large load in a direction where at least the part of the pillar 20 is pulled upward from the locker 10 acts in the vicinity of the joint region 30 of the pillar 20 and the locker 10, stress concentration is likely to be generated in a boundary section between the section to which the patch member 50 is disposed and the section to which the patch member 50 is not disposed in the locker 10. Accordingly, as illustrated in FIG. 9, in the locker 10, a vicinity of the patch member 50 in the section to which the patch member 50 is not disposed is likely to be deformed and a bent portion 70 is likely to be generated in the section.

In other words, since the section to which the patch member 50 is disposed in the joint region 30 of the pillar 20 and the locker 10 is reinforced by the patch member 50, the section is less likely to be deformed even when a large load in a direction where the locker 10 is deformed is input. Accordingly, the locker 10 is deformed in the vicinity of the section to which the patch member 50 is disposed and the bent portion 70 is generated in the vicinity of the patch member 50.

Further, since the shape of the patch member 50 when viewed from the vehicle front-back direction is formed in the substantially L-shape, strength of the vehicle is increased in any direction of the up-down direction and the width direction of the vehicle, and strength of the locker 10 in the section to which the patch member 50 is disposed is increased. Accordingly, in the locker 10, since the section to which the patch member 50 is disposed is further less likely to be deformed, the locker 10 is deformed in the vicinity of the section to which the patch member 50 is disposed and the bent portion 70 is generated.

Further, when the pillar 20 is pulled upward from the locker 10, a force is transmitted to the pillar 20 and the locker 10 via the welding portions 62. Accordingly, although a large force acts on the welding portions 62, the patch member 50 disposed to the joint region 30 of the pillar 20 and the locker 10 is disposed in the region including all the welding portions 62 in the plural welding portions 62. Accordingly, when the locker 10 is deformed in the vicinity of the section to which the patch member 50 is disposed by inputting a large load to the joint section of the pillar 20 and the locker 10, the locker 10 is deformed in a section other than the section to which the welding portions 62 are positioned. Accordingly, in the locker 10, since deformation of the section to which the welding portions 62 are positioned is suppressed and the bent portion 70 is less likely to be generated to the section to which the welding portions 62 are positioned, the welding portions 62 are suppressed from being broken by the bent portion 70 generated on the section to which the welding portions 62 are positioned.

Further, the patch member 50 is not disposed to the lower side in the locker 10 and is disposed near to the upper section in the locker 10. Accordingly, when the large load is input in a section to which the joint region 30 of the locker 10 and the pillar 20 is positioned in the vehicle front-back direction, the locker 10 is likely to be deformed on the lower side. In contrast, the pillar 20 is joined to the section of the locker 10 near to the upper section and disposed extending upward of the locker 10. Accordingly, when the large load is input to the locker 10, a region of the pillar 20 on a side opposite to a side where the pillar 20 extends from the locker 10 is likely to be deformed in the section to which the joint region 30 in a front-back direction of the locker 10 is positioned. That is, since a position of the locker 10 near to the upper section which is the region in which the welding portions 62 are positioned is less likely to be deformed, the welding portions 62 are suppressed from being broken.

Further, the cutout portions 52 are formed to the patch member 50 and are formed to position to sections of the some of the welding portions 62. Accordingly, the patch member 50 is disposed to positions corresponding to the peripheries of the welding portions 62. With the configuration, when the large load is input to the joint region 30 of the pillar 20 and the locker 10, a load acting in the vicinities of the welding portions 62 is concentrated in the vicinity of a section to which the edge of the patch member 50 is positioned, and stress of the section is increased. Accordingly, in the section to which the welding portions 62 are positioned, the locker 10 is likely to be deformed in the vicinity of a section to which the edge of the patch member 50 positioned in the peripheries of the welding portions 62 is positioned, that is, in the vicinity of a section to which edges of the cutout portions 52 formed to the patch member 50 are positioned. Accordingly, since the locker 10 is less likely to be deformed on the welding portions 62, the welding portions 62 are suppressed from being broken.

In particular, when the welding sections 62 to which the cutout portions 52 are positioned are the welding sections 62 whose stress becomes excessive at the time the load acts on the joint region 30, a breakage is likely to be generated when the load acts on the joint region 30. However, when the cutout portions 52 are positioned to the sections to which the welding sections 62 are positioned, the excessive stress is distributed to peripheries of the welding sections 62. With the configuration, since excessive stress is less generated to the welding sections 62 even when the load acts on the joint region 30, the welding sections 62 whose stress is likely to become excessive are suppressed from being broken.

When a large load acts on the frame member 1 due to the collision and the like of the vehicle, although a large load acts on also the joint region 30 of the locker 10 and the pillar 20, the patch member 50 is disposed to the joint region 30. Since the patch member 50 adjusts the deformation of the frame member 1 when the large load acts on the frame member 1 as described above, a joint of the locker 10 and the pillar 20 joined by the joint region 30 is not broken even when the large load acts on the locker 10 and the pillar 20 and the joint state is kept.

In the vehicle body structure described above, since the patch member 50, which deforms the locker 10 in the desired state when the load acts on the joint region 30, is disposed to the joint region 30 of the locker 10 and the pillar 20, even when a large load acts on the joint region 30, the locker 10 can be suppressed from being deformed in the sections to which the welding portions 62 are positioned. With the configuration, the welding portions 62 can be suppressed from being broken due to the deformation of the locker 10 in the sections to which the welding portions 62 are positioned. As a result, even when the large load acts on the joint region 30 which is the joint section of the locker 10 and the pillar 20, the joint can be kept.

Further, the patch member 50 is disposed in the region whose length in the vehicle front-back direction is a little longer than the region in which all the welding portions 62 are positioned. With the configuration, the patch member 50 does not simply reinforce the joint region 30 but can generate a difference of strength between the sections to which the welding portions 62 are positioned and the section other than the above sections. Accordingly, when the large load acts on the joint region 30, since the locker 10 can be deformed in the section other than the sections to which the welding portions 62 are positioned, the welding portions 62 can be suppressed from being broken. As a result, even when the large load acts on the joint region 30 of the locker 10 and the pillar 20, the joint can be kept.

Further, the cutout portions 52 formed to the patch member 50 are disposed to the sections to which some of the welding portions 62 are positioned. That is, since the patch member 50 is disposed excluding the peripheries of the welding portions 62, when the large load acts on the joint region 30, the sections to which the welding portions 62 are positioned can cause the locker 10 to be likely to be deformed in the vicinities of the sections to which the edges the cutout portions 52 are positioned. With the configuration, the welding portions 62 can be suppressed from being broken due to the deformation of the locker 10 in the sections to which the welding portions 62 are positioned. As a result, even when the large load acts on the joint region 30 of the locker 10 and the pillar 20, the joint can be kept.

In particular, when the welding sections 62 to which the cutout portions 52 are positioned are the welding sections 62 whose stress becomes excessive at the time the load acts on the joint region 30, the excessive stress is distributed to the peripheries of the welding sections 62 and the deformation of the locker 10 due to the excessive stress is likely to be generated in the vicinities of the sections to which the edges of the cutout portions 52 are positioned. With the configuration, the welding portions 62 whose stress is likely to become excessive are certainly suppressed from being broken. As a result, even when the large load acts on the joint region 30 of the locker 10 and the pillar 20, the joint can be more certainly kept.

Further, since the patch member 50 is formed in the substantially L-shape and disposed to the joint region 30 by being formed in the shape having the high strength, strength of the section in the joint region 30 to which the patch member 50 is disposed can be more certainly increased. Accordingly, even when the large load acts on the joint region 30, it can be more certainly suppressed that the locker 10 is deformed in the sections to which the welding portions 62 are positioned and that the welding portions 62 are broken. As a result, even when the large load acts on the joint region 30 of the locker 10 and the pillar 20, the joint can be more certainly kept.

Further, since the patch member 50 is disposed near to the upper section in the locker 10, the patch member 50 is disposed without including a lower side region which is a region on a side opposite to a side to which the pillar 20 extends in the locker 10. Accordingly, when the large load is input to the locker 10 by that the large load is input to the joint region 30, the locker 10 is likely to be deformed to the lower side to which the patch member 50 is not disposed. Accordingly, even when the large load is input to the joint region 30, since the position near to the upper section of the locker 10 which is the region to which the pillar 20 extends can be made to be less likely to be deformed, the welding portions 62 which join the pillar 20 and the locker 10 can be more certainly suppressed from being broken. As a result, even when the large load acts on the joint region 30 of the locker 10 and the pillar 20, the joint can be more certainly kept.

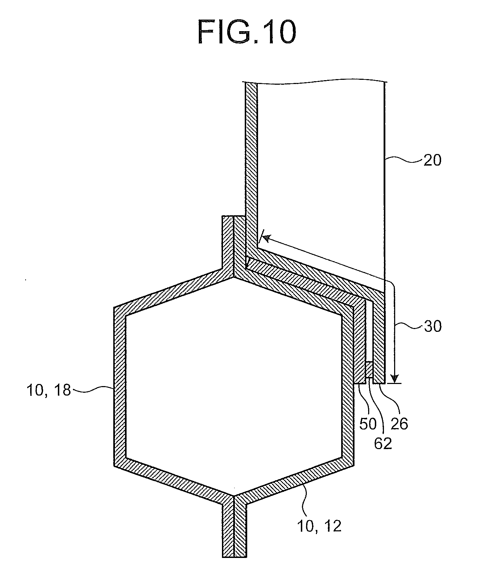

Note that in the vehicle body structure described above, although the patch member 50 is disposed inside of the locker 10 and the pillar 20 is joined to outside of the section to which the patch member 50 is disposed in the locker 10, the position to which the patch member 50 is disposed may be a section other than inside of the locker 10. FIG. 10 is an explanatory view illustrating a modification of the vehicle body structure according to the embodiment. For example, the patch member 50 may be disposed on an outside surface of the locker outer 12, that is, between the locker 10 and the pillar 20. In the case, the patch member 50 is welded to outside of the locker 10, and the pillar 20 is joined to the locker 10 via the patch member 50 by being connected to the patch member 50 from outside of the patch member 50 by spot welding and the like. Even when the patch member 50 is disposed outside of the locker 10 as described above, since the joint region 30 can be reinforced by disposing the patch member 50 to the joint region 30, when the large load acts on the joint region 30 of the locker 10 and the pillar 20, the locker 10 can be deformed in a section other than the joint region 30. With the configuration, even when the large load acts on the joint region 30, the joint between the locker 10 and the pillar 20 can be kept.

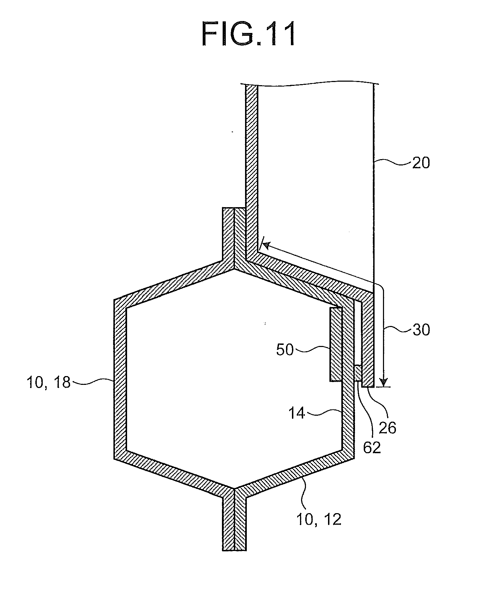

FIG. 11 is an explanatory view illustrating a modification of the vehicle body structure according to the embodiment. Further, although the shape of the patch member 50 described above is formed in the substantially L-shape when viewed from the vehicle front-back direction, the patch member 50 may be formed in a shape other than the L-shape. For example, the patch member 50 may be formed in a sheet-like shape and may be disposed inside of the outer side surface 14 of the locker outer 12. That is, the patch member 50 may be formed in the sheet-like shape and may be disposed in the range in which the plural welding portions 62 are positioned. As described above, even when the patch member 50 is formed in the sheet-like shape, the joint region 30 can be reinforced by disposing the sheet-like patch member 50 to the joint region 30. With the configuration, when the large load acts on the joint region 30 and the locker 10 is deformed by the load, since the locker 10 can be deformed in the section other than the welding portions 62, the joint of the locker 10 and the pillar 20 can be kept.

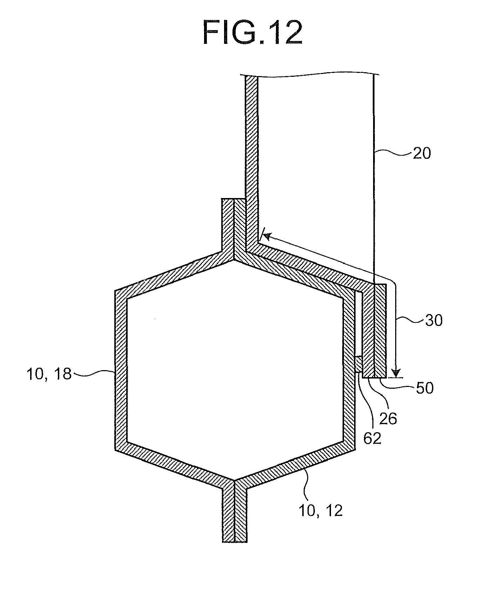

FIG. 12 is an explanatory view illustrating a modification of the vehicle body structure according to the embodiment. Further, the patch member 50 may be disposed to the pillar 20 in place of being disposed to the locker 10. For example, the patch member 50 may be formed in a sheet-like shape and disposed to outside of the joint portion 26 provided with the pillar 20. When the large load acts on the joint region 30, what is deformed may be not only the locker 10 but also the pillar 20. In particular, since stress due to a load is likely to be concentrated to the section positioned on the extending lines of the ridge lines 24 of the pillar 20 in the joint region 30, the sections positioned on the extending lines of the ridge lines 24 in the pillar 20 are likely to be deformed by the concentration of stress as described above. Accordingly, since the stress concentration can be reduced by improving strength of the pillar 20 by reinforcing the pillar 20 by disposing the patch member 50 outside of the joint portion 26 of the pillar 20, the pillar 20 can be suppressed from being deformed in the joint region 30. With the configuration, since the pillar 20 can be suppressed from being deformed in the sections to which the welding portions 62 are positioned, the joint of the locker 10 and the pillar 20 can be kept.

With the configurations described above, it is sufficient to dispose the patch member 50 to the joint region 30 so that at least any one of the locker 10 or the pillar 20 is deformed in the desired state when the load acts on the joint region 30 of the locker 10 and the pillar 20.

Further, in the explanation described above, although the pillar 20 is explained using a so-called center pillar connected to the vicinity of an intermediate section of the locker 10 in the vehicle front-back direction, the pillar 20 may be a pillar other than the center pillar. For example, the pillar 20 may be a front pillar disposed to a front end side of the locker 10 in the vehicle front-back direction and a rear pillar disposed to a rear end side of the locker 10. Even when the large load acts on the joint region 30, the joint of the locker 10 and the pillar 20 can be kept by disposing the patch member 50 to the joint region 30 of the pillar 20 and the locker 10 regardless of a type of the pillar 20.

### Industrial Applicability

As described above, the vehicle body structure according to the present invention is useful to a body structure for securing strength of a vehicle body and, in particular, suitable for suppressing a damage when a large load is generated at the time of collision of a vehicle, and the like.

### Reference Signs List

- 1: frame member
- 10: locker
- 12: locker outer
- 18: locker inner
- 20: pillar
- 22: pillar reinforce
- 24: ridge line
- 26: joint portion
- 30: joint region
- 40: roof rail
- 50: patch member
- 52: cutout portion
- 60: welding position
- 62: welding portion
- 70: bent portion

## Claims

1. A vehicle body structure that constitutes a vehicle body, wherein
a deformation inducing member is disposed to a joint region of a locker and a pillar to deform at least any one of the locker or the pillar in a desired state when a load acts on the joint region of the locker and the pillar.

2. The vehicle body structure according to claim 1, wherein
the deformation inducing member is disposed excluding peripheries of a plurality of welding portions which are positioned to the joint region and join the locker and the pillar and whose stress becomes excessive when a load acts on the joint region in the welding portions.

3. The vehicle body structure according to claim 1 or 2, wherein
the deformation inducing member is formed in an L-shape and disposed to the joint region.

4. The vehicle body structure according to claim 1, wherein
the deformation inducing member is disposed without including a region on a side opposite to a side where the pillar in the locker extends from the locker.
